Europäisches Patentamt

European Patent Office

Office européen des brevets

(11) Veröffentlichungsnummer: **0 023 535**
**B1**

(12) **EUROPÄISCHE PATENTSCHRIFT**

(45) Veröffentlichungstag der Patentschrift:
**23.02.83**

(51) Int. Cl.³: **G 03 B 23/16**

(21) Anmeldenummer: **80102263.3**

(22) Anmeldetag: **26.04.80**

(54) **Überblend-Stehbildwerfer.**

(30) Priorität: **31.07.79 DE 2930958**

(43) Veröffentlichungstag der Anmeldung:
**11.02.81 Patentblatt 81/6**

(45) Bekanntmachung des Hinweises auf die Patenterteilung:
**23.02.83 Patentblatt 83/8**

(84) Benannte Vertragsstaaten:
**AT BE CH FR GB IT LI LU NL SE**

(56) Entgegenhaltungen:
**keine**

(73) Patentinhaber: **Rollei-Werke Franke & Heidecke GmbH
+ Co KG, Salzdahlumer Strasse 196,
D-3300 Braunschweig (DE)**

(72) Erfinder: **Sobotta, Reinhard, Schreiberkamp 9,
D-3300 Braunschweig (DE)**

(74) Vertreter: **Gramm, Werner, Prof. Dipl.-Ing. et al,
Patentanwälte Gramm + Lins Theodor-Heuss-Strasse 2,
D-3300 Braunschweig (DE)**

Überblend-Stehbildwerfer

Die Erfindung betrifft einen Überblend-Stehbildwerfer, bestehend aus 2 vollständigen, achsenparallel einseitig neben dem gemeinsamen Stabmagazin angeordneten Bildwerfersystemen.

Die seitliche Anordnung der Stabmagazine wird allgemein bevorzugt, weil das Magazin problemlos ausgewechselt werden kann und Störungen, etwa durch Verklemmen der Dias, leichter behebbar sind.

Bei Doppelbildwerfern bringt diese Magazinanordnung Probleme mit sich, weil der dem Magazin nähere Bildwerfer den Zugang des aussenliegenden Bildwerfers zum gemeinsamen Magazin behindert. Bei einem Überblend-Dop-pelbildwerfer der beschriebenen Kategorie wur-den die beiden Bildwerfer in Richtung der optischen Achse verschiebbar angeordnet, um den Durchgang des Greifers durch die Achse des mittleren Bildwerfers vorübergehend freizugeben. Dafür musste ein aufwendiger Reversierantrieb für die Axialverschiebung der Bildwerfer oder wenigstens für die des mittleren Bildwerfers mit seiner verhältnismässig grossen Masse in Kauf genommen werden. Ausserdem mussten Erschütterungen auf das projizierte Bild vermieden werden (vgl. DE-B-2 259 651).

Aufgabe der Erfindung ist es, diesen hohen konstruktiven und betrieblichen Aufwand zu vermeiden oder zu vermindern, ohne dass schwerwiegende Nachteile in Kauf genommen werden müssen.

Diese Aufgabe wird erfindungsgemäss dadurch gelöst, dass die beiden Bildwerfer fest, jedoch in Achsrichtung derartig gestaffelt auf der Grundplatte angeordnet sind, dass der Zugang zwischen der äusseren Bildfensterführung und dem Magazin durch den dem Magazin näheren Bildwerfer freigegeben ist und dass der Achsabstand der Bildfensterebenen der halben Länge des zugeordneten Magazins entspricht, indem die Dias in der ersten Hälfte in ungerader und in der zweiten Magazinhälfte in gerader Zahlenfolge eingeordnet sind.

Es zeigt sich überraschenderweise, dass die Anpassung des Bildwerfers an ein Magazin mit dieser Dia-Ordnungsart in Verbindung mit der Festlegung des Achsabstandes der Bildfensterebenen auf die halbe Magazinlänge nicht nur die zu erwartende kurze Bauweise des Bildwerfers ergibt, weil das Magazin nur einen Raum von dem 1¹/₂fachen der Magazinlänge zwischen seinen beiden Grenzlagen beansprucht, und zwar im Gegensatz zu dem normalen Magazin, welches praktisch die doppelte Raumlänge in Anspruch nimmt, sondern es ergibt sich auch eine ganz wesentliche Herabsetzung des be-trieblichen Aufwandes, weil nur noch ein sehr einfaches Magazinschrittschaltwerk benötigt wird, nämlich ein solches, das jeden Zyklus, d.h. für eine vollständige Verarbeitung eines Dia-Paares, nur eine Schaltung von einem Vorwärts-, einem Rückwärts- und einem Vorwärtsschritt benötigt. In den Zeichnungen ist ein Ausführungsbeispiel der Erfindung dargestellt und zwar zeigt

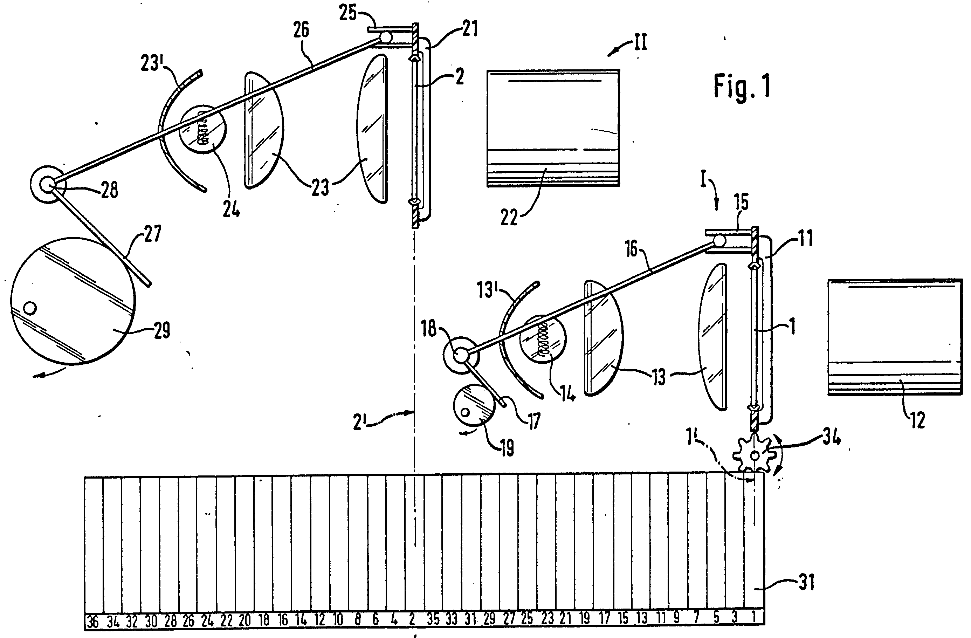

Fig. 1 die Anordnung und Zuordnung der we-sentlichen Bildwerferteile in einem schemati-schen Grundriss.

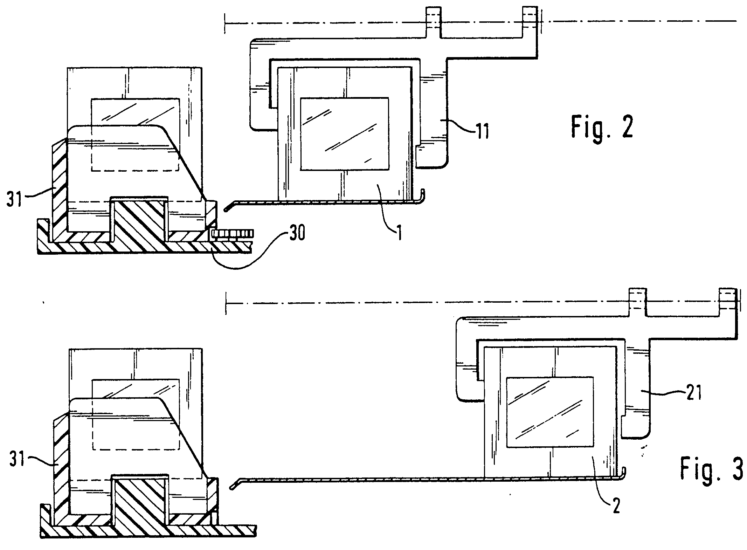

Fig. 2 eine Frontansicht des Magazins und Diagreifers des einen, und

Fig. 3 des anderen Teilbildwerfers, und

Fig. 4 das Ablaufdiagramm eines vollständigen Wechselzyklus für ein Dia-Paar.

Die Bildwerfer I, 11-14 und II, 21-24 sind ne-ben der Führung für das Magazin 31 auf der Grundplatte gestaffelt angeordnet, d.h. der Bildwerfer I, 11-14 liegt in Projektionsrichtung vorn und dem Magazin benachbart, während der zweite Bildwerfer II, 21-24 in Projektionsrichtung rückwärts und in einem grösseren Abstand von der Magazinführung versetzt ist. Zweck dieser Anordnung ist es, dass die Bildwerfer sich gegenseitig nicht stören und dass der Zugang des äusseren Bildwerfers zum Magazin 31 freibleibt. Der senkrechte Mindestabstand der beiden Bildfensterebenen ergibt sich aus der Baulänge des Bildwerfersystems I, 11-14 einschliesslich seines Antriebs. Beide Bildwerfer sind im wesentlichen identisch bis auf die Abweichungen im Wechselgetriebe, die sich aus dem unterschiedlichen Abstand der Bildfenster vom Magazin ergeben. Die Bildwerfer bestehen aus den Diagreifern 11, 21 mit den Dias 1, 2, den Objektiven 12, 22, der Beleuchtungsoptik 13, 13' und 23, 23' und den Lampen 14, 24. Der Greiferantrieb erfolgt von den Exzenterscheiben 19, 29 über die Winkelhebel 16, 17 und 26, 27, die um gehäusefeste Zapfen 18, 28 schwenkbar sind, und die an den Führungsgabeln 15, 25 an den Greifern 11, 21 angekuppelt sind. Der Antrieb des Magazins 31 erfolgt in der üblichen Weise durch ein Ritzel 30, welches in eine Verzahnung des Stabmagazins eingreift. Die Magazinlänge beträgt das Doppelte des durch die kontruktiven Gege-benheiten der Projektoren gegebenen Abstan-des der Bildfensterführungen 1' und 2'. Selbstverständlich kann der Projektor auch mit kürzeren oder längeren Magazinen bestückt werren. Jedoch kann es dann zu Fehlüberblendungen oder zu einer Projektion in falscher Reihenfolge bzw. zu Wiederholungen kommen.

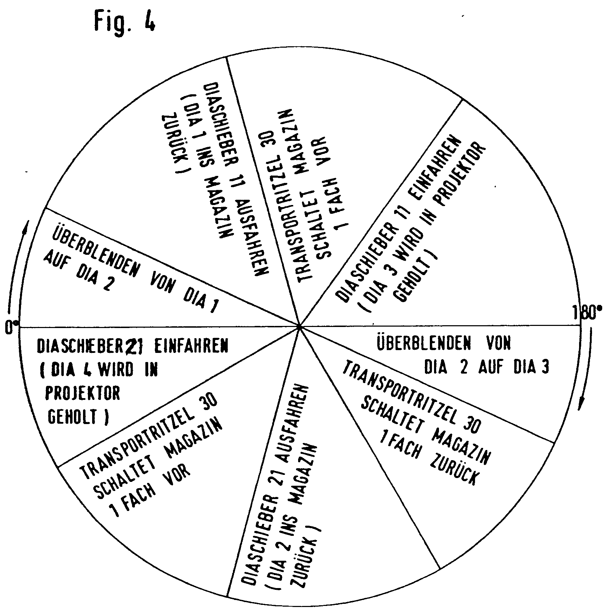

In Fig. 4 ist die Funktionsfolge eines vollständigen Zyklus dargestellt, welcher den Wechsel von zwei aufeinanderfolgenden Dias umfasst. Es wird dabei von der Anfangslage ausgegangen, in der sich das Dia 1 und das Dia 2 in den entsprechenden Bildfenstern befinden. In der Endstellung befinden sich die Dias 3 und 4 in den Bildfenstern. In der Anfangsstellung, d.h. Ruhestellung, wird das Dia 1 projiziert und in der 180-Grad-Stellung das Dia 2 und dann weiter in der 360-Grad-Stellung das Dia 3. Da die Greiferantriebe 19 und 29 und der Ritzelantrieb fest in das Programm eingeschlossen sind, können sie fest mit einem zentralen Antrieb verbunden werden, und dieser zentrale Antrieb kann vorwärts oder rückwärts erfolgen, ohne dass Störungen auftreten oder die Schalteinrichtungen ausser Tritt geraten können.

Bei Inkaufnahme der eingangs angeführten Einschränkung auf ein Magazin bestimmter Länge bzw. bestimmter Kapazität und bestimmter Einordnungsart der Dias in diesem Magazin kann also durch die erfindungsgemässe Anordnung ein voll wirksamer betriebsicherer Überblendprojektor mit sehr geringem betrieblichen · und mechanischen Aufwand aufgebaut werden.

## Patentanspruch

Überblend-Stehbildwerfer, bestehend aus zwei vollständigen, achsenparallel einseitig neben dem gemeinsamen Stabsmagazin angeordneten Bildwerfersystemen, dadurch gekennzeichnet, dass die Bildwerfer (I, 11-14; II, 21-24) fest, jedoch in Achsrichtung derart gestaffelt auf der Grundplatte angeordnet sind, dass der Zugang zwischen der äusseren Bildfensterführung (2) und dem Magazin (31) durch den dem Magazin näheren Bildwerfer (I, 11-14) freigegeben ist, und dass der Achsabstand der Bildfensterebenen (1, 2) der halben Länge des zugeordneten Magazins (31) entspricht, in dem die Dias in der ersten Hälfte in ungerader, in der zweiten Magazinhälfte in gerader Zahlenfolge eingeordnet sind.

## Claim

Fade-in slide projector, consisting of two complete projector systems arranged to one side of the joint strip magazine and extending parallel to its axis, characterised in that the projectors (I, 11-14; II, 21-24) are fixed to the base plate but staggered in axial direction in such a way that the projector (I, 11-14) closer to the magazine allows the outer picture gate guide (2) to access the magazine (31), and in that the axial distance between the picture gate planes (1, 2) is half the length of the associated magazine (31), in which the slides are arranged in even-numbered sequence in the first half and in odd-numbered sequence in the second half.

## Revendication

Projecteur de diapositives assurant le fondu-enchaîné, constitué de deux systèmes projecteurs d'images complets, d'axes parallèles, disposés du même côté du magazin droit commun, caractérisé en ce que les deux projecteurs (I, 11-14; II, 21-24) sont fixés sur l'embase, mais sont décalés selon la direction axiale de façon que l'accès entre le guidage de fenêtre d'images extérieur (2) et le magasin (31) est laissé libre par le projecteur (I, 11-14) le plus proche du magasin, et en ce que la distance axiale entre les plans de fenêtre d'images (1, 2) correspond à la demi longueur du magasin associé (31), dans lequel les diapositives d'ordre pair sont rangées dans la première moitié du magasin et les diapositives d'ordre impair sont rangées dans la seconde moitié du magasin.

Fig.1

Fig. 2

31

30

11

1

Fig. 3

31

21

2

0 023 535

Fig. 4

DIASCHIEBER 11 AUSFAHREN ( DIA 1 INS MAGAZIN ZURÜCK )

TRANSPORTRITZEL 30 SCHALTET MAGAZIN 1 FACH VOR

DIASCHIEBER 11 EINFAHREN ( DIA 3 WIRD IN PROJEKTOR GEHOLT )

ÜBERBLENDEN VON DIA 1 AUF DIA 2

0°

180°

DIASCHIEBER 21 EINFAHREN ( DIA 4 WIRD IN PROJEKTOR GEHOLT )

ÜBERBLENDEN VON DIA 2 AUF DIA 3

TRANSPORTRITZEL 30 SCHALTET MAGAZIN 1 FACH VOR

DIASCHIEBER 21 AUSFAHREN ( DIA 2 INS MAGAZIN ZURÜCK )

TRANSPORTRITZEL 30 SCHALTET MAGAZIN 1 FACH ZURÜCK